# EUROPÄISCHE PATENTSCHRIFT

(11) **EP 0 551 544 B1**
(45) Veröffentlichungstag und Bekanntmachung des Hinweises auf die Patenterteilung: **22.04.1998**
(21) Anmeldenummer: 92100644.1
(22) Anmeldetag: 16.01.1992
(51) Int. Cl.: G01N 17/00

(54) **Verfahren zum Überwachen des Korrosionszustandes von metallischen, in Zementfundamenten eingebetteten Pfählen und Masten**
Method for monitoring the state of corrosion of metallic pillars and posts, embedded in concrete foundations
Méthode de contrôle de l'état de corrosion des poteaux et pylônes enfoncés dans des fondations de ciment

(43) Veröffentlichungstag der Anmeldung: 21.07.1993
(73) Patentinhaber: RENCO S.p.A, I-20133 Milano (IT)
(72) Erfinder: Vitali, Roberto, I-60100 Ancona (IT); Bazzoni, Bruno, I-20123 Milano (IT)
(74) Vertreter: Gustorf, Gerhard, Dipl.-Ing.

(56) Entgegenhaltungen:
- DE-A- 2 030 671
- GB-A- 2 224 852
- GB-A- 2 227 565
- US-A- 3 999 121
- US-A- 4 511 844

## Beschreibung

Die Erfindung betrifft ein Verfahren zum elektrochemischen Überwachen von metallischen, in Zementfundamenten eingebetteten Masten nach dem Oberbegriff des Patentanspruchs 1.

Zur Abstützung von im Freien verlegten, elektrischen Leitungen, Beleuchtungsanlagen, Signaleinrichtungen und dergleichen werden stangenförmige, metallische Strukturen verhältnismäßig großer Abmessungen eingesetzt, die als Pfähle oder Masten bezeichnet werden. Diese bestehen im allgemeinen aus gezogenem Stahl und sind in Zementfundamenten eingebettet, welche ihrerseits im Erdreich eingelassen oder verankert sind. Die aus Stahl oder verzinktem Stahl bestehenden Pfähle und Masten sind der Korrosion ausgesetzt, da das Metall oxidiert, welches den Hauptbestandteil der Pfähle und Masten darstellt. Die Korrosionserscheinungen haben auf dem freien Teil der Pfähle und Masten und auf dem in dem Fundament eingebetteten Teil unterschiedliche Eigenschaften.

Bei der Korrosion des freien Teils eines Mastes handelt es sich um eine atmosphärische Korrosion, deren Erscheinungsbild von der Umgebung abhängt, in dem der Pfahl oder Mast steht. Die Korrosion ändert sich somit in Abhängigkeit von dieser Umgebung, die landwirtschaftlich genutzt sein kann, am Meer angrenzt, in einer Stadt liegt oder in einer Industriezone. Die Korrosionserscheinungen dieses äußeren Teils der Masten können daher mit guten Erfolgsaussichten vermieden oder gemildert werden, und zwar durch Verzinkung oder Rostanstriche.

Die Erfindung zielt daher auf den Teil der Pfähle und Masten, der in der Erde liegt und im allgemeinen in Zementfundamenten eingebettet ist, wo die Korrosionserscheinungen durch diese Einbettung beeinflußt werden. Die Korrosion entsteht hier durch den Kontakt des Eisens mit dem in Wasser gelösten Sauerstoff, und zwar durch einen elektrolytischen Prozeß aufgrund von zwei voneinander abhängigen Prozeßverläufen. In einem anodischen Oxidationsprozeß des Eisens bildet sich in einer Umgebung aus Zement oder Beton eine dünne Sauerstoffschicht, und in einem kathodischen Prozeß werden die im anodischen Prozeß frei gewordenen Elektronen verbraucht, was zu einer Reduzierung des im Wasser gelösten Sauerstoffs bei Kontakt mit den metallischen Strukturen führt.

Es handelt sich somit um einen elektrochemischen Prozeß, der von elektrischen Parametern wie dem Potential und dem Strom abhängt. Die Korrosionserscheinungen sind außerdem an der Oberfläche festzustellen und hängen nicht von der Metallmasse ab, sondern nur von der der Umgebung ausgesetzten Oberfläche des Metalls, so daß die Korrosionsreaktion eine Funktion der Bedingungen ist, welche lokal am Übergang Metall-Umgebung vorliegen und sich erheblich von den Bedingungen unterscheiden, welche sich in den Grenzbereichen derselben Umgebung im Laufe der Zeit einstellen.

Wenn man eine Prüfung bei der Einbettung des metallischen Pfahls in den Zement durchführt, stellt man fest, daß der Zement die Korrosion des Metalls aufgrund der Alkalität des Zementes erheblich verringert, da die Alkalität die Oxidation dadurch hemmt, daß sie die Passivierung des Metalls, das heißt die Bildung einer dünnen Oxidschicht begünstigt, welche chemisch inert ist und dadurch die weitere Oxidation des Metalles verhindert.

Allerdings können sich verhältnismäßig häufig Ablöseerscheinungen des Pfahles von dem Zement einstellen, d.h. es können im Zement Hohlräume oder Risse auftreten, die Übergänge und Zwischenräume bilden, in denen sich Wasser und Niederschläge sammeln können, die zu empfindlichen Oxidationserscheinungen führen und vor allem im Bereich der Oberseite des Fundamentes auftreten, die somit die kritische Stelle ist, wo Wasser am leichtesten eindringen kann und sich vor allem chemisch aggressive Stoffe sammeln können.

Die Rost verhindernden Eigenschaften des Zementes können außerdem abgeschwächt werden durch Chorsalze, die im Fall von Seewassernähe aus der Atmosphäre kommen, als Verunreinigungen in den Stoffen vorhanden sind, aus denen das Zementkonglomerat besteht, oder die später eingebracht worden sind, beispielsweise durch die Verteilung von Salz als Frostschutzmittel auf Straßen.

Obwohl sich diese Ätiologien und Korrosionsdynamiken verringert haben, sind sie dennoch nicht zu vermeiden, vor allem auch dann, wenn das in die Erde eingelassene Ende des Mastes durch Verzinkung geschützt ist, wodurch die Strukturen über längere Zeiträume abgebaut werden, die jedoch häufig kleiner als die vorausberechnete Lebensdauer der gesamten Anlage sind.

Aus diesen Ausführungen wird klar, wie einige der metallischen Pfähle und Masten für Stromleitungen oder andere Anlagen verschiedenster Art Korrosionserscheinungen unterworfen sein können, und zwar in dem Teil, der in der Erde eingelassen ist, insbesondere im Bereich der oberen Begrenzungsfläche, wodurch innerhalb verhältnismäßig kurzer Zeit und vor Ablauf der berechneten Lebensdauer der gesamten Anlage die Stabilität beeinträchtigt wird. Aus diesem Grunde sind Überprüfungen und Überwachungen erforderlich, die periodisch durchgeführt werden müssen und auch nach verhältnismäßig langen Intervallen den Korrosionszustand feststellen sollen, so daß beschädigte Strukturen ausgewechselt werden können. Bei bekannten Überwachungsverfahren wird die Oberseite des Zementfundamentes um den Mast herum zerstört, so daß der Korrosionszustand durch Sichtprüfung festgestellt werden kann. Dabei ist es günstig, wenn zusätzlich die restliche Dicke mit Ultraschall überprüft wird, wozu der Ultraschallwandler an die freigelegten metallischen Oberflächen gelegt wird und ein Koppler an der gegenüberliegenden Seite liegt. Der Aufwand und die Nachteile dieser herkömmlichen Technik liegen auf der Hand, denn ein Bereich des Fundamentes muß zerstört und anschließend wiederhergestellt werden, wobei durchaus das Ergebnis dieser Untersuchung sein kann, daß keine Korrosionen an den metallischen Masten der Anlage festgestellt wurden.

Um Strukturen lokalisieren zu können, deren in der Erde eingebetteter Teil auf Korrosionen schließen läßt, die die Stabilität beeinflussen, ohne dabei die aufwendige Zerstörungsprüfung der oben erläuterten Technik anwenden zu müssen, sind verschiedene Verfahren untersucht und entwickelt worden, die sich jedoch in der Praxis nur als wenig wirksam herausgestellt haben, insbesondere aufgrund der Tatsache, daß dabei im allgemeinen Größen ermittelt werden, die nur sehr beschränkt aussagefähig sind, oder daß Phänomene erfaßt und ausgewertet werden, die, obwohl sie mit dem Korrosionszustand verbunden sind, nicht bezeichnend und symptomatisch für das vorliegende Korrosionsphänomen sind, oder daß schließlich nur makroskopische Auswirkungen der Korrosion ermittelt werden. Die Verfahren dieser Gruppe können etwa in der folgenden Weise beschrieben werden:

Analysetechnik des Metalls und der Umgebung; diese ist nur sehr bedingt geeignet, die Verhältnisse festzustellen, die tatsächlich am lokalisierten und verborgenen Übergang Metall-Umgebung vorliegen, denn, wie bereits oben angedeutet, diese örtlichen Bedingungen können erheblich von den Zuständen an den Grenz- und Übergangszonen abweichen, die für sich allein ausreichen, Korrosionserscheinungen auch erheblichen Ausmaßes aufgrund der oben erläuterten Parameter auszulösen, die für die Oberflächenwirkung der Korrosion charakteristisch sind.

Das radiografische Verfahren benützt die Durchdringung von Röntgenstrahlen oder Gammastrahlen durch Metall mit anschließender Darstellung auf einem Film, so daß im Inneren befindliche Hohlräume mit Korrosionserscheinungen und die Bildung von größeren Rissen erkannt werden können, um die Stabilität der Struktur, Dünnwandigkeiten und eingeschlossene Korrosionen festzustellen.

Das Ultraschallverfahren benutzt die Tatsache der Einbringung von Ultraschallwellen in das Material und die Bestimmung des von der Oberfläche ausgehenden Hinweges und Rückweges der Schallwellen, um dadurch Dickenmessungen durchzuführen und vor allem auch besonders schwache Risse feststellen zu können.

Die Fehlerstrommethode beruht auf einem in einer Feldmagnetspule umlaufenden Wechselstrom, wodurch im Metall Wirbelströme induziert werden, deren Amplitude in einer zweiten Spule gemessen wird, um dadurch Anomalien im Querschnitt und Risse erkennen zu können, insbesondere Oberflächenrisse.

Bei dem Verfahren mit eindringenden Flüssigkeiten werden gefärbte Flüssigkeiten verwendet, die Oberflächenrisse ausfüllen und dabei örtlich ein weißes Pulver färben, das zuvor aufgebracht worden ist; auf diese Weise können anstehende Oberflächenrisse erkannt werden.

Bei einem akustischen Verfahren werden von einem Mikrophon Töne erfaßt, die von dem belasteten Material durch freiwerdende elastische Energie abgegeben werden, so daß Risse und Hohlräume erkannt werden können, insbesondere die Ausbreitung von Rissen.

Die magnetoskopische Methode verwendet einen im Metall umlaufenden Magnetfluß, der von einem Permanentmagneten oder Elektromagneten erzeugt worden ist, welcher mit dem zu untersuchenden Stück über ein Magnetjoch verbunden ist, das in Anwesenheit von Rissen oder Fehlern im Bereich der Oberfläche an der Außenseite die Flußlinien freilegt, wodurch eine Anhäufung von in Öl suspendiertem Metallpulver erzeugt wird, mit welchem das Werkstück benetzt worden ist, so daß Risse sichtbar gemacht werden können.

Bei dem metallurgischen Aufzeichnungsverfahren wird ein Teil der metallischen Oberfläche, die vermutlich von Korrosion befallen ist, auf einem Film metallografisch aufgezeichnet, um mögliche Strukturveränderungen sichtbar zu machen.

Bei der Sichtkontrolle erfolgt eine Beobachtung mittels Sonden mit optischen Fasern, so daß der innere Aufbau und Korrosionserscheinungen ermittelt werden können.

Bei dem thermographischen Verfahren wird das Verlaufsbild der an der Oberfläche herrschenden Temperaturen mittels der Beobachtung von Infrarotstrahlen benutzt, um warme und kalte Stellen der Anlage zu erfassen und Verletzungen der Isolierschicht festzustellen.

Ein Verfahren der im Oberbegriff des Patentanspruchs 1 genannten Art ist aus der GB-A 2 224 852 bekannt. Bei diesen sind zwei Meßinstrumente vorgesehen, von denen das eine mit dem Minuspol und das andere mit dem Pluspol an einem im Fundament eingebetteten Leiter angeschlossen sind. Das bedeutet, daß bereits bei der Herstellung der Struktur der Leiter zwei aus dem Fundament herausstehende Anschlüsse haben muß, um die Korrosionsprüfung durchführen zu können. Andernfalls müßte zur Korrosionsprüfung das Fundament zerstört werden, um die Anschlüsse an den Leiter zu führen. Die beiden Eletroden werden bei diesem Verfahren punktweise auf dem Fundament abgestützt, unabhängig von der Lage des im Fundament eingebetteten Leiters.

Gegenstand der US-A 4 511 844 ist eine Einrichtung zur automatischen Erfassung von Daten für eine Strom-Spannungs-Charakteristik, bei der durch eine im Gelände eingebettete Metallstruktur ein Stromfluß geleitet und dann unterbrochen wird, um die Abnahme der Restpolarisation in der Struktur und der Elektrolyten in dem anschließenden Bodenbereich festzustellen. Mit den gemessenen Daten kann dann der Strom-Spannungs-Verlauf gezeichnet werden, so daß Angaben über den Korrosionsstrom und die erforderliche Kathodenschutzspannung gemacht werden können.

Der Erfindung liegt die Aufgabe zugrunde, ein Verfahren anzugeben, mit dessen Hilfe eine zerstörungsfreie, genaue Prüfung und bequeme Überwachung des Korrosionszustandes von Masten möglich ist, die mit einem Teil ihrer Länge im Fundament eingebettet sind und mit einem Teil aus diesem Fundament hervorstehen.

Bei dem Verfahren der im Oberbegriff des Patentanspruchs 1 angegebenen Gattung wird diese Aufgabe erfindungsmäßig durch das Kennzeichen dieses Patentanspruchs gelöst.

Mit der Erfindung steht ein zerstörungsfreies Prüfverfahren zur Verfügung, mit dessen Hilfe in einer Anlage mit einer größeren Anzahl metallischer Masten, die in Fundamenten eingebettet sind, diejenigen Masten ermittelt werden können, bei denen am Übergang von Metall zu Zement oder Beton Korrosionserscheinungen vorliegen, die so erheblich sind, daß die Stabilität der entsprechenden Struktur gefährdet ist. Dabei können ohne Zerstörung der Fundamente diejenigen Strukturen festgestellt werden, an denen die Korrosion bereits begonnen hat, so daß herkömmliche Eingriffe in Erwägung gezogen werden können, um nur eine begrenzte Anzahl möglicherweise gefährdeter Strukturen zu behandeln.

Weitere Merkmale und Vorteile der Erfindung ergeben sich aus den Unteransprüchen und aus der folgenden Beschreibung eines Ausführungsbeispiels, das in der Zeichnung dargestellt ist. Es zeigen:
Figur 1 einen Vertikalschnitt durch einen metallischen Mast, der in ein Zementfundament eingebettet ist, sowie die mit beiden verbundenen Mittel zur Durchführung des Verfahrens gemäß der Erfindung, und
Figur 2 die Draufsicht der Anordnung der Figur 1.

Das Verfahren zum Überwachen des Korrosionszustandes gemäß der Erfindung beruht auf dem Prinzip der linearen Polarisation, das nachstehend erläutert wird. Aus der oben beschriebenen, elektrochemischen Natur des Korrosionsprozesses mit einem anodischen Teilprozeß der Oxydation des Eisens und einem kathodischen Teilprozeß des Verbrauchs der freien Elektronen im anodischen Teilprozeß folgt, daß sich am Übergang von dem metallischen Material (elektrischer Leiter) und der Umgebung, z.B. Wasser, Erdreich oder Zement (ionische Leiter) eine Polarisation entwickelt, deren elektrische Potentialdifferenz in der Größenordnung von einigen Hundert mV als Potential freier Korrosion (Ecorr) bezeichnet wird.

Wenn der Übergangsbereich zwischen Metall und Umgebung durch einen schwachen Strom (I) elektrisch gestört wird, wird das Potential (E) des Übergangsbereiches bezüglich des Potentials Ecorr der freien Korrosion verändert. Wenn das auf den Übergang Metall-Umgebung induzierte Potential Ecorr-E ausreichend klein ist, wird das Verhältnis (Ecorr-E)/ I als Polarisationswiderstand Rp bezeichnet. Wenn die metallische Oberfläche, die polarisiert worden ist, bekannt ist, ist diese Größe mit dem Polarisationsstrom (Icorr) und damit mit der Korrosionsgeschwindigkeit gekoppelt.

In Anwendung dieses Prinzips sieht das Verfahren gemäß der Erfindung vor, an jeder Struktur oder jedem Mast der Anlage das Potential der freien Korrosion Ecorr am entsprechenden Übergang Metall-Umgebung sowie das Polarisationpotential zu ermitteln, welches diesen Übergang mit unterschiedlichen Polarisationsströmen stört. Über die unterschiedlichen Stärken der Polarisationsströme ergibt sich dann der Polarisationswiderstand aus dem Verhältnis zwischen der Potentialänderung und dem Polarisationsstrom bei den unterschiedlichen Stromstärken, wodurch die Größen des Korrosionsstromes ermittelt werden können, die auf die Korrosionsgeschwindigkeit in der untersuchten Struktur schließen lassen. In entsprechender Weise kann vorgegangen werden, wenn man eine vorbestimmte Polarisation ausreichender, mittlerer Größe im Zehnerbereich von mV anlegt und dann mit einer geeigneten Vorrichtung den Strom mißt, der notwendig ist, um diese Polarisation hervorzurufen; diese Vorgehensweise ist sicherlich noch genauer, da sie eine bessere Kontrolle des Polarisationsniveaus und daher eine zuverlässigere und genauere Messung des Polarisationswiderstandes Rp gestattet.

Wenn die Daten aller Strukturen der Anlage verglichen werden, können die Werte größerer Korrosionsgeschwindigkeit extrapoliert werden, und zwar durch Identifizierung der entsprechenden Strukturen und nachfolgenden Eingriff mit begrenzter Zerstörung.

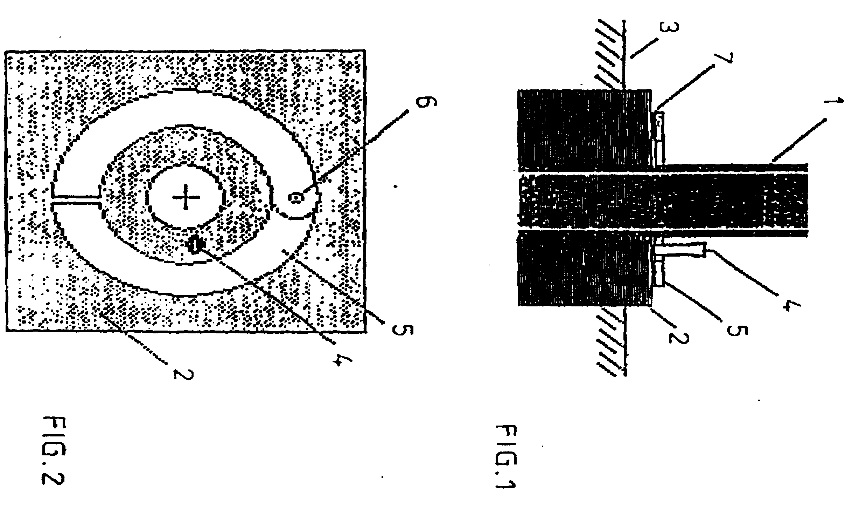

Die Durchführung des Verfahrens gemäß der Erfindung ist in den Figuren 1 und 2 angedeutet. Wie insbesondere Figure 1 zeigt, ist ein metallischer Mast 1 in einem Fundament 2 aus Zement befestigt, welches nahezu vollständig im Erdreich 3 eingebettet ist.

Mit 4 ist eine Referenzelektrode bezeichnet, die aus Kupfer oder gesättigtem Kupfersulfat besteht und mit dem Fundament 2 verbunden ist, vorzugsweise untor Zwischenschaltung einer dünnen Schicht aus einem feuchten Schwamm zwischen dem porösen Abschnitt der Elektrode und dem Zement, um den Berührungswiderstand zu verringern. Diese Anordnung und Befestigung der Referenzelektrode ist die bevorzugte, wobei die Elektrode alternativ auch im Erdreich 3 befestigt werden kann.

Mit 5 ist eins Gegenelektrode als Bezugselement bezeichnet, die eine ringförmige oder zangenförmige struktur mit Scharnier 6 haben kann, wie Figur 2 zeigt. Das Scharnier 6 kann im Fundament 2 befestigt sein, und zwar ebenfalls unter Zwischenschaltung einer dünnen Schicht 7 aus einem Schwamm, um den Berührungswiderstand zu verringern. Die ringförmige Gegenelektrode 5 ist so um den Mast 1 herumgelegt, daß sie auch die Referenzelektrode 4 einschließt. Die dargestellte Anordnung und Struktur der Gegeneleketrode 5 ist die bevorzugte, da sie es gestattet, die in die aus Mast und Fundament bestehende Einheit induzierte Störung auf den oberen Bereich des Fundamentes zu zentrieren, wo sich die Korrosionserscheinungen im allgemeinen einstellen. Alternativ kann die Gegenelektrode aus einem elektrischen Befestigungsbolzen bestehen, der in der Erde eingebettet ist.

Die Apparatur wird durch ein Instrument vervollständigt, mit dessen Hilfe das Korrosionspotential Ecorr und das Polarisationspotential Ep ermittelt und der Polarisationsstrom geändert werden können oder umgekehrt vorgegebene Polarisationswerte eingegeben werden können und gleichzeitig der entsprechende erforderliche Strom ermittelt werden kann. Das Instrument kann aus Elementen zusammengesetzt sein, die im Handel erhältlich sind. Allerdings ist es günstig, ein Instrument vorzusehen, das besser auf den hier vorgesehenen Einsatzzweck abgestimmt ist, beispielsweise eine Polarisierungseinheit, die mit einem Personalcomputer verbunden ist, der so programmiert ist, daß die Meßwerte automatisch aufgezeichnet werden und mögliche Fehler aufgrund eines Spannungsabfalls im zement korrigiert werden. Die Eliminierung der Fehlerterme des Spannungsabfalls kann mit der sogenannten "Instant off"-Technik erfolgen, bei der die Größe der Potentialänderung erfaßt wird, die in den ersten Momenten (Millisekunden) nach der Öffnung der Polarisationsschaltung induziert worden ist, so daß die Widerstandsterme, welche sofort abfallen, von den Polarisationstermen, die langsamer gedämpft werden, abgetrennt werden. Alternativ können die Terme des Spannungsabfalls eliminiert werden, und zwar mit einem automatischen Kompensationssystem oder einem ähnlichen System.

Das nicht gezeigte Instrument wird über eine nicht gezeigte Klemme an den Mast 1, an die Referenzelektrode 4 und an die Gegenelektrode 5 angeschlossen, und zwar über nicht gezeigte elektrische Kabel. Das Überwachungsverfahren wird dann in der folgenden Weise ausgeführt:
Zunächst wird der Ladungszustand der Batterien des Meßinstrumentes geprüft und anschließend das Korrosionspotential Ecorr gemessen. Dann wird das System zur Polarisation und Meßwerterfassung installiert, worauf die Polarisation des Übergangs von Metall zur Umgebung eingeleitet wird, wobei der erforderliche Strom für die Polarisation gemessen wird. Die Polarisationsprüfung wird sowohl in anodischer als auch in kathodischer Richtung durchgeführt, wobei eventuell der eingestellte Polarisationswert verändert wird.

Die entsprechenden Daten werden manuell in eine Liste eingetragen oder vorzugsweise automatisch auf einem "data logger" oder einem Personalcomputer gespeichert.

Das Verfahren wird für jeden Mast wiederholt, der Bestandteil der gesamten Anlage ist.

Das Verfahren gemäß der Erfindung zum Überwachen des Korrosionszustandes ist keine Alternative zu den Untersuchungsmethoden des Standes der Technik, denn es ist nicht möglich, die verbliebene Dicke der untersuchten Massen festzustellen. Das Verfahren gemäß der Erfindung ergänzt vielmehr in funktioneller Weise die bekannten Untersuchungstechniken, da die zu untersuchenden Strukturen auf eine beschränkte Anzahl begrenzt bleiben, die dann einer Zerstörungsprüfung unterzogen werden, um eine Sichtkontrolle durchzuführen und die verbliebenen, noch nicht vom Rost zerstörten Dicken des Metalls über Ultraschall zu ermitteln. Hieraus ergeben sich erhebliche Einsparungen und betriebliche Vorteile.

Das Verfahren gemäß der Erfindung gestattet mithin die Erfassung des Gesamtzustandes der Struktur, wobei diejenigen Strukturen festgestellt werden können, die mit einem Risiko behaftet sind und an denen nur dann die herkömmlichen Eingriffe vorgenommen werden können.

## Patentansprüche

1. Verfahren zum elektrochemischen Überwachen von metallischen, in Zementfundamenten eingebetteten Masten für die Feststellung und Bewertung des Korrosionszustandes des im Fundament eingebetteten Teiles des Mastes durch Anwendung des Prinzips der linearen Polarisation, bei dem an eine Referenzelektrode (4) und an eine Gegenelektrode (5) ein Spannungsmeßinstrument angeschlossen wird, das mit der metallischen Struktur des Mastes verbunden wird und das Potential der freien Korrosion und die Potentialänderungen in der metallischen Struktur bei unterschiedlichen Stärken des hierbei induzierten Polarisationsstroms erfaßt, worauf aus dem Verhältnis zwischen der Potentialänderung (Ecorr-E) und dem Polarisationsstrom bei verschiedenen Stromstärken (I) der Polarisationswiderstand (Rp) ermittelt wird, wonach der Wert des Korrosionsstromes (Icorr) und der Korrosionsgeschwindigkeit festgestellt wird, dadurch gekennzeichnet, daß das Spannungsmeßgerät mit dem nicht im Fundament eingebetteten Teil des Mastes verbunden wird, daß die Referenzelektrode (4) unter Zwischenschaltung einer dünnen Schwammschicht mit dem Fundament (2) verbunden ist und daß die Gegenelektrode (5) aus einer zangenartigen, mit Scharnier (6) versehenen Metallstruktur besteht, die unter Zwischenschaltung einer dünnen Schwammschicht (7) so auf dem Fundament (2) abgestützt wird, daß sie den Mast (1) und die Referenzelektrode (4) umschließt.

2. Verfahren nach Anspruch 1, dadurch gekennzeichnet, daß die Stärken des Polarisationsstromes (Icorr) 0,5, 1, 2, 5 und 10 mA betragen.

3. Verfahren nach Anspruch 1 oder 2, dadurch gekennzeichnet, daß die für einen Mast ermittelten Daten mit den Daten aller Maststrukturen einer Anlage verglichen und diejenigen Masten bestimmt werden, bei denen die Korrosionsgeschwindigkeit am höchsten ist, so daß Zerstörungseingriffe für eine nähere Untersuchung und eventuelle Reparatur oder Ersatz auf diese wenigen Maststrukturen beschränkt bleiben.

## Claims

1. A method for the electrochemical monitoring of metal posts embedded in cement foundations for determining and evaluating the state of corrosion of the section of the post embedded in the foundations, using the principle of linear polarisation, in which a voltmeter is connected to a reference electrode (4) and a counterelectrode (5), which voltmeter is connected to the metal structure of the post and registers the potential of free corrosion and the potential variations in the metal structure at different intensities of the polarisation current induced, and from the ratio between the potential variation (Ecorr-E) and the polarisation current at different current intensities (I), the polarisation resistance (Rp) is ascertained, according to which the value of the corrosion current (Icorr) and the speed of corrosion are determined, characterised in that the voltmeter is connected to the section of the post not embedded in the foundation, in that the reference electrode (4) is connected to the foundation (2), a thin sponge layer being interposed, and in that the counterelectrode (5) comprises a clasp-like metal structure with a hinge (6), which with a thin sponge layer (7) interposed is supported on the foundation (2) in such a way that it encompasses the post (1) and the reference electrode (4).

2. A method according to claim 1, characterised in that the intensities of the polarisation current (Icorr) are 0.5, 1, 2, 5 and 10mA.

3. A method according to claim 1 or 2, characterised in that the data gathered for one post is compared with the data of all the post structures in one installation and those posts with the highest speed of corrosion are determined, with the result that destructive interventions for closer examination and possible repair or replacement are restricted to these few post structures.

## Revendications

1. Méthode de contrôle électrochimique de pylônes métalliques enfoncés dans des fondations de ciment destinée à constater et à évaluer l'état de corrosion de la partie du pylône enfoncée dans la fondation en appliquant le principe de la polarisation linéaire, selon lequel un instrument de mesure de tension, raccordé à une électrode de référence (4) et à une contre-électrode (5), est relié à la structure métallique du pylône et mesure le potentiel de la corrosion libre et les variations de potentiel dans la structure métallique à des intensités différentes du courant de polarisation induit, avec lequel on obtient, à partir du rapport entre la variation de potentiel (Ecorr-E) et le courant de polarisation à différentes intensités de courant (I), la résistance de polarisation (Rp), à la suite de quoi on constate la valeur du courant de corrosion (Icorr) et de la vitesse de corrosion, caractérisée par le fait que l'appareil de mesure de tension est relié à la partie du pylône non enfoncée dans la fondation, que l'électrode de référence (4) est reliée à la fondation (2), une mince couche en éponge ayant été intercalée, et que la contre-électrode (5) est composée d'une structure métallique en forme de pince dotée d'une charnière (6) qui est maintenue, une mince couche en éponge (7) ayant été intercalée sur la fondation (2) de telle sorte qu'elle entoure le pylône (1) et l'électrode de référence (4).

2. Méthode conforme à la revendication 1, caractérisée par le fait que les intensités du courant de polarisation (Icorr) sont de 0,5, 1, 2, 5 et 10 mA.

3. Méthode conforme à la revendication 1 ou 2, caractérisée par le fait que les données obtenues pour un pylône sont comparées avec les données de toutes les structures de pylônes d'une installation et qu'on détermine les pylônes pour lesquels la vitesse de corrosion est la plus élevée, si bien que les interventions destructives destinées à une recherche plus approfondie, à une réparation éventuelle ou au remplacement restent limitées à ces quelques structures de pylônes.
